# EUROPEAN PATENT SPECIFICATION

(11) **EP 1 999 459 B1**
(45) Date of publication and mention of the grant of the patent: **24.06.2015**
(21) Application number: 07726914.0
(22) Date of filing: 15.03.2007
(51) Int. Cl.: G01N 25/04

(54) **METHOD FOR CHECKING THE COMPOSITION OF AN AMMONIA PRECURSOR SOLUTION**
VERFAHREN ZUR PRÜFUNG DER ZUSAMMENSETZUNG EINER AMMONIKAVORLÄUFERLÖSUNG
PROCÉDÉ SERVANT À VÉRIFIER LA COMPOSITION D'UNE SOLUTION PRÉCURSEUR D'AMMONIAQUE

(30) Priority: 16.03.2006 FR 0602309
(43) Date of publication of application: 10.12.2008
(73) Proprietor: Inergy Automotive Systems Research (Société Anonyme), 1120 Brussels (BE)
(72) Inventor: DOUGNIER, François, B-3190 Boortmeerbeek (BE)
(74) Representative: de la Bigne, Guillaume Michel Marie
(86) International application number: PCT/EP2007/052423
(87) International publication number: WO 2007/104779

(56) References cited:
- EP-A- 1 538 437
- FR-A- 2 175 449
- GB-A- 1 350 248
- US-A- 4 114 421
- KEMIRA OYJ: "Kemira develops new solutions for reducing nitrogen emissions from diesel engine exhaust gas" CHEMIE.DE, [Online] 21 January 2005 (2005-01-21), XP002411070 Berlin Retrieved from the Internet: URL:http://www.chemie.de/news/e/42719> [retrieved on 2006-12-11]

## Description

### Introduction

The present invention relates to a method for determining the quality of an ammonia precursor solution used in particular in a vehicle exhaust gas pollution control system.

### Prior art

Legislations on vehicles and trucks emissions call, inter alia, for a decrease in the nitrogen oxide NOₓ discharges into the atmosphere. To achieve this objective, the SCR (Selective Catalytic Reduction) process is known, for reducing the nitrogen oxides by injecting a reducing agent, generally ammonia, into the exhaust line. This ammonia may issue from the thermolytic decomposition of an ammonia precursor solution whereof the concentration may be that of the eutectic. Such an ammonia precursor is generally a urea solution.

With the SCR process, the high NOₓ discharges produced in the engine during combustion at optimized efficiency are treated in a catalyst upon leaving the engine. This treatment requires the use of the reducing agent with a precise concentration and in an extreme quality. The solution is thus accurately batched, and injected by a nozzle into the exhaust gas stream, where it is hydrolysed before converting the nitrogen oxide (NOₓ) to nitrogen (N₂) and water (H₂O).

The difficulty of the SCR process resides in the fact that, for the proper running of the process, a proper dosage of the reducing agent is necessary. For this purpose, it is important to know the composition of the urea solution, and particularly the urea concentration in the solution.

Several quality control methods have been proposed. Thus, for example, patent US 6 408 619 proposes the use of a conductivity sensor to measure the conductivity of the solution. The urea concentration in the solution is then determined on the basis of the measured conductivity.

In patent application WO 2004/113897, a method is proposed in which the permittivity and conductivity of the solution are determined, and the urea concentration is then determined on the basis of a direct relationship between the permittivity and the conductivity determined.

Another method is described in patent application WO 2004/025286, according to which a pulsed voltage is applied to a device for heating a urea solution, the solution is heated locally, and the urea concentration in the solution is determined on the basis of an output potential difference corresponding to a temperature difference between an initial temperature and a maximum temperature of a temperature sensor.

FR2715449 discloses a method for checking the composition of an ammonia precursor solution, namely ammonia nitrate, comprising the steps of determining, under the same given conditions, a reference curve of a change in temperature of a standard solution as a function of time and a test curve of a change in temperature of the urea solution as a function of time. The two curves are then compared in order to determined the freezing point, and from there, the concentration of the solution.

However, these relatively complicated (and costly) methods are not sufficiently accurate and reliable. In fact, the relatively low urea concentration in the solution makes it rather difficult to determine the urea concentration in the solution on the basis of the conductivity. For example, urea does not appear to have a fixed dielectric constant, but one that depends on the temperature and the chemical reactions in the urea, which comprise variable quantities of ammonium hydroxide. As the urea becomes hotter and older, the quantity of ammonium hydroxide increases, thereby further complicating the determination of a dielectric characteristic of the urea. Furthermore, the determination of the concentration on the basis of the conductivity may be considerably influenced by any impurities in the solution.

Since it is necessary to determine accurately the urea concentration in the solution for the satisfactory operation of the SCR process, it is advantageous to find a method for the most accurate and most reliable determination.

### Object of the invention

It is the object of the present invention to propose a method for determining, with enhanced accuracy and simplicity, the quality of an ammonia precursor used in a vehicle exhaust gas pollution control system. This object is achieved by a method according to Claim 1.

### General description of the invention claimed with its main advantages

The inventive method implies the knowledge, for the composition to be checked, of a reference curve plotting the change in temperature of a solution having exactly the desired composition, as a function of time under given conditions over a temperature range comprising a change of state of the solution. This change of state is generally the transition from the liquid phase to the solid phase (freezing point of the solution which is cooled) or conversely, the transition from the solid phase to the liquid phase (melting point of the solution which is heated).

This basic curve is preferably stored in a memory, for example, that of a computer or calculator.

Subsequently, according to the invention, a sample of the solution whereof the composition is to be checked is subjected to a temperature change over the same temperature range and under the same conditions as those used to plot the reference curve. This produces a curve which it suffices to compare with the theoretical curve and if the two are identical, it can be inferred that the composition is exactly the desired composition.

To obtain the abovementioned curves, identical quantities (samples) of solution are generally used, successively placed in the same temperature-controlled chamber, which is subjected to a temperature programming in the desired range; and the variation in temperature of the sample of solution (or the variation in heat flux emitted or received by the said sample: see below) is measured.

A method which is suitable for this purpose consists in creating the temperature variation of the enclosure by thermo-electric effect (Peltier effect).

A curve indicating the temperature of the sample as a function of time elapsed is plotted both with the reference solution (single curve, stored in memory) and then, with each solution whereof the composition is to be checked.

For a binary solution having a eutectic, a constant temperature plateau is observed in the temperature change curve of the solution, which corresponds to the melting/crystallization point of the eutectic. When the composition of the solution is that of the eutectic, the curve comprises two substantially linear portions separated by the abovementioned plateau. In contrast, when the composition of the solution is different from that of the eutectic, the "linear" portion located above the temperature of the eutectic comprises a break and is split into two substantially linear fractions having different slopes, whereof the intersection corresponds to the temperature at which the excess component begins to crystallize. Also in this case, the length of the plateau is reduced. Hence the linearity analysis of the temperature change curve above the characteristic temperature serves (in the case of binary solutions with eutectic) to check the initial composition of the solution.

For a ternary solution, the characteristic temperature may, for example, be determined by locating a slope break on the temperature change curve. The characteristic temperature is characteristic of a particular solution having a given composition. In consequence, the method is also applicable to a ternary solution.

It may be concluded that if the characteristic temperature is identical to the theoretical characteristic temperature, the solution is at the ideal composition. The plotting of reference curves on either side thereof and corresponding to "extreme" tolerated compositions serves to evaluate the deviation from ideality and, optionally, to accept or reject the solution for a given use. The tolerance range may, for example, be +/-5°C, preferably, +/-3°C and very preferably, +/-1°C with regard to the theoretical characteristic temperature.

Similarly, a "linearity" (shape) defect in the curve above the characteristic temperature could indicate an early precipitation of one of the components in the solution, which is an indication of a different concentration from the desired concentration.

The solution whereof the composition is checked in the context of the invention is an ammonia precursor solution used particularly as a reducing agent in a vehicle exhaust gas pollution control system. When injected into the vehicle exhaust line, the ammonia precursor serves to convert the nitrogen oxide to nitrogen and water.

The ammonia precursor solution may be a urea solution, that is, a binary solution of water and urea, and it may be concluded that, if the curve has a plateau at -11°C (= characteristic temperature) and if, upstream of the characteristic temperature, it does not display a linearity defect, the urea solution is a solution having a urea concentration of 32.5% by weight. If there is no linearity defect in the curve above the characteristic temperature, the solution is a eutectic solution. In such a eutectic solution, the concentration of the component in the solution does not change with the temperature of the solution.

A urea concentration of 32.5% by weight corresponds to the desired concentration of an AUS 32 urea solution having the quality requirements of German standard DIN 70070:2005-08. This standard describes the quality requirements of the NOₓ reducing agent used in the SCR catalysts of diesel engine vehicles and requires a concentration in the range of between 31.8% and 33.2% by weight, with a nominal concentration of 32.5% by weight.

The ammonia precursor may also be a ternary solution of water, urea and ammonium formiate, and it may be concluded that, if the characteristic temperature corresponds to the freezing point of the solution and if the curve upstream of the characteristic temperature does not display a linearity defect, the water/urea/ammonium formiate solution has a concentration usable in a vehicle exhaust gas pollution control system.

The water/urea/ammonium formiate solution, may, for example, be a solution known by its trade name DENOXIUM™ and may have a freezing point of -30°C. Such a solution is capable of delivering, in the SCR process, a quantity of ammonia equivalent to that of the aqueous urea solution having the eutectic composition. It should be noted that the DENOXIUM™ solution exists in various concentrations, each having a corresponding freezing point.

According to the invention, the quality of the ammonia precursor is checked during the filling of the storage tank, the storage tank being mounted on the vehicle and delivering the ammonia precursor solution to the vehicle exhaust line.

The quantity of ammonia precursor delivered to the vehicle exhaust line may further be checked by a control device.

The quality of the ammonia precursor may be further controlled on board the vehicle and this quality may be taken into account by the control device to determine the quantity of ammonia precursor to deliver to the exhaust line. Thus, a change in urea concentration of the solution during the storage thereof in a tank can be taken into account to adjust the quantity of solution delivered to the exhaust line. However, it should be noted that such a change in concentration is very slight and generally negligible for temperatures below 30°C.

The present invention further relates to the use of the inventive method in an exhaust gas pollution control device comprising a tank for storing an ammonia precursor solution and a separate chamber of the tank comprising a wall whereof the temperature is controlled and a device for measuring the temperature of a sample of solution inside the chamber or the variation in heat flux emitted or received by the said sample. This device may, for example, be a thermocouple or a heat flux sensor.

The device for controlling the chamber wall temperature may be a heat exchanger or a Peltier cooler. The latter is preferred.

The chamber is generally a closable volume having a lower capacity than that of the storage tank and which may be located inside or outside the said tank. Preferably, the location is such that this chamber is filled as soon as the tank is filled.

In an alternative, the subject matter of published applications FR2902136 and EP2029865 in the name of the applicant, discloses systems where the storage tank comprises an "immersed" base placed across an opening made in the bottom wall of the tank, the said base comprising at least one orifice through which a system can be fed for injecting the ammonia precursor solution into the exhaust gases, and further integrating at least one other active component of the storage system and/or of the injection system. Preferably, in this variant, the temperature-controlled chamber mentioned above is integrated with this base.

### Description using the figures

Other features and advantages of the invention will appear from the description of the drawings appended hereto, which show:
Fig. 1: a theoretical phase diagram of two components A and B;
Fig. 2: a graph showing the cooling curves of several solutions corresponding to given points of the phase diagram in Figure 1; and

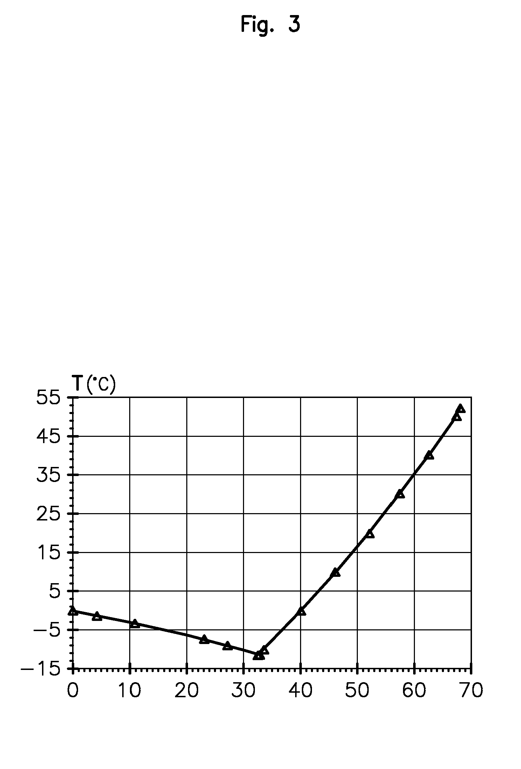

Fig. 3: the water/urea phase diagram plotted at atmospheric pressure with, on the x-axis, the urea concentration in g of urea per 100 g of solution and, on the y-axis, the temperature.

The SCR process, used to reduce nitrogen oxide NOₓ discharges into the atmosphere, is a process in which ammonia or urea is added to the flue gases in a quantity depending on the quantity of NOₓ to be reduced. The flue gases containing NH₃ then pass through a multibed catalyst in a temperature range of between 250 and 380°C. The catalysts most commonly used are metal oxides on TiO₂ or Al₂O₃ support. The reaction chamber may be located upstream of the flue gas purification unit, on the high-dust SCR gases, or downstream of the purification unit, on the heated low-dust SCR gases. The process is characterized by a high reduction rate, often higher than 90%, for an ammonia batch close to stoichiometry, thereby limiting the risk of leaks.

The ammonia precursor solution used in the SCR process to convert the nitrogen oxide (NOₓ) to nitrogen (N₂) and water (H₂O) is generally a urea solution comprising technically pure urea, without additives, and pure water. According to the German standard DIN 70070:2005-08, the AUS 32 solution, also known by its trade name AdBlue™, has a urea concentration of 31.8 to 33.2% by weight, preferably 32.5% by weight.

During the filling of the vehicle storage tank with urea solution, it is recommended to check the quality of the solution. It is necessary to control the urea concentration in the solution in order to inject the right quantity of urea into the vehicle exhaust line to ensure proper conversion of the nitrogen oxide to nitrogen and water.

Furthermore, according to German standard DIN 70070:2005-08, the AUS 32 solution has a density of between 1087.0 and 1093.0 kg/m³ at 20°C and a refractive index of between 1.3814 and 1.3843 at 20°C.

The inventive method allows an accurate and reproducible determination of the urea concentration in the solution.

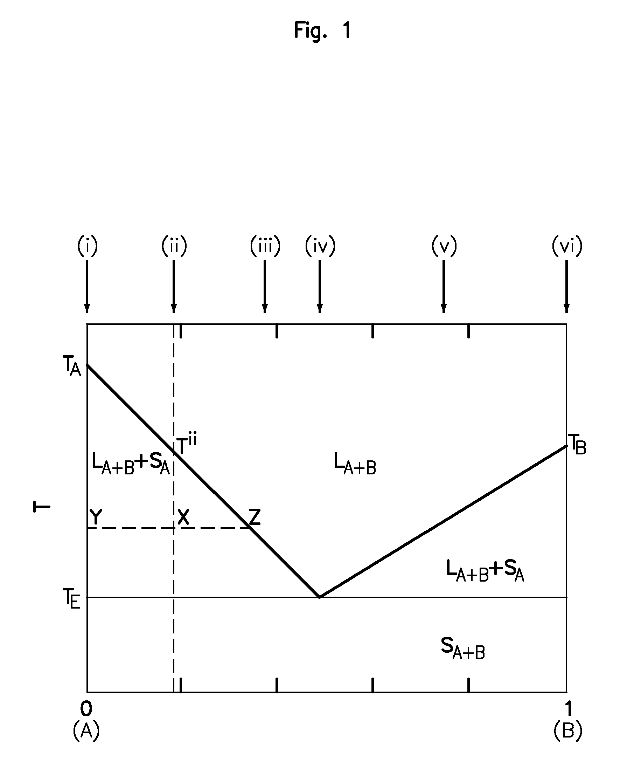

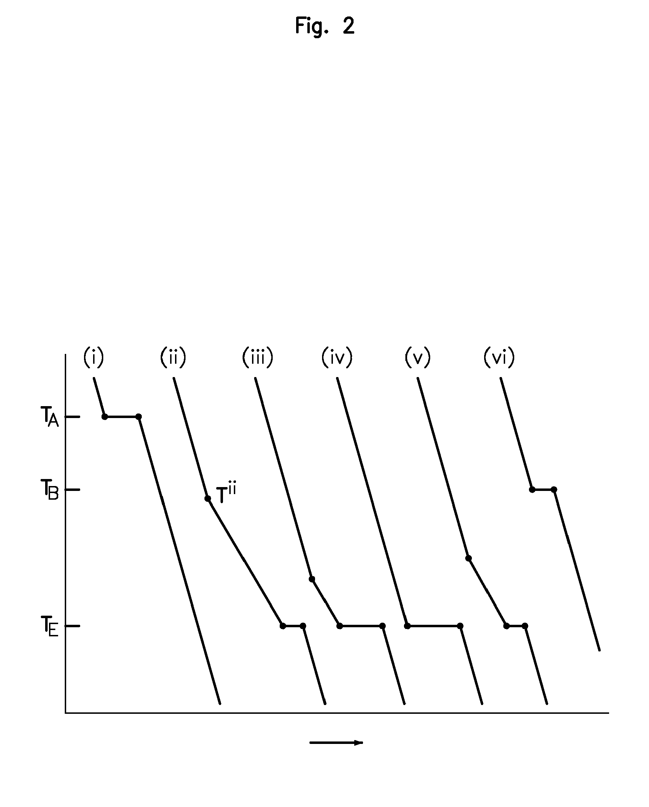

The method is based on the properties of phases of a binary type of solution. In a phase diagram, the left hand component is generally denoted component "A" and the right hand component is generally denoted component "B". Such a phase diagram is shown in Fig. 1, in which the freezing point is shown (on the y-axis) with regard to the molar fraction of component B (on the x-axis). The phase diagram in Fig. 1 can be constructed by using temperature change curves like those shown in Fig. 2. The temperature change curves (i) to (vi) in Fig. 2 are associated with solutions having different concentrations. The concentration of component B is indicated in Fig. 1 for each temperature change curve. Thus, solutions (i) and (vi) are pure solutions of component A, and of component B respectively. Solutions (ii) to (v) comprise a mixture of component A and component B.

The temperature change curve (i) corresponds to a pure solution A, that is, comprising 0% of component B. When the sample is cooled, the sample temperature decreases according to the first section of the temperature change curve. When, at temperature T_{A}, the freezing point of component A is reached, the component A in the solution begins to precipitate. During this precipitation, heat of fusion is released and the sample temperature remains constant. When all the liquid has solidified, the temperature of the sample, which is now a solid, again decreases. The plateau in the temperature change curve indicates the freezing point of the sample and, for solution (i), the freezing point corresponds to the temperature T_{A}, the freezing point of component A.

The temperature change curve (vi) corresponds to a pure solution B, that is, comprising 0% of component A. This curve is similar to the curve of solution (i) and in this case, the freezing point is T_{B}, the freezing point of component B.

The temperature change curve (ii) corresponds to a solution comprising a mixture of component A and component B. The solution is initially in a purely liquid phase, that is, comprising the liquid component A and the liquid component B (=L_{A}+_{B}).

During the cooling of the sample, the sample temperature decreases according to the first section of the temperature change curve. When, at a temperature Tⁱⁱ, the freezing point of component A is reached, the curve changes direction. At the temperature Tⁱⁱ, component A begins to solidify. The two phases (liquid (=L_{A+B}) rich in A/solid component A (=S_{A})) are in equilibrium and the heat of fusion released by the solidification of component A changes the cooling rate of the sample. This change in cooling rate is clearly visible in Fig. 2. When the temperature falls below Tⁱⁱ, for example, to reach the value corresponding to the horizontal dotted line (Fig. 1), the average composition of the two phases is given by point X, that of the liquid phase by point Z and that of the solid phase by point Y. The ratio between the quantity of solid phase and the quantity of liquid phase is given by XZ/XY. When the temperature continues to fall, the composition of the solid phase is unchanged (100% of A) and that of the liquid phase follows the line Tⁱⁱ-Z to reach the eutectic composition.

A second change in sample cooling rate takes place at the eutectic temperature T_{E}. At this temperature, three phases exist (liquid (=L_{A+B})/solid component A (=S_{A})/solid component B (=S_{B})) in equilibrium. The sample temperature remains constant until the two components A and B are completely solidified.

The temperature change curves of the solutions (iii) and (v) are similar to those of solution (ii), except that for the curve (v), the liquid is richer in B and it is the solid B (=S_{B}) that precipitates. Due to the different composition of these solutions, the temperature Tⁱⁱ, at which the freezing point of one of the two components A and B is reached, is different.

The temperature change curve (iv) corresponds to a particular solution called "eutectic". For the eutectic solution, the temperature Tⁱⁱ, at which the freezing point of a first of the two components A and B is reached, is at the same time the temperature at which the freezing point of the second component is reached. The temperature Tⁱⁱ consequently corresponds to the eutectic temperature T_{E}. The solution at the eutectic concentration is such that the solution remains completely liquid until the eutectic temperature is reached. It is only at the eutectic temperature that the solution begins to solidify.

As to an SCR process using an aqueous urea solution, the urea solution is ideally at the eutectic concentration, which is preferred because it has the lowest crystallization point. To check whether this solution is in fact a urea solution meeting these requirements, it therefore suffices to analyse the temperature change curve of a sample of the solution. If the temperature change curve clearly displays a plateau at -11°C and if, upstream of this plateau, it does not display any linearity defect, it can be concluded that the solution is clearly a urea solution with a urea concentration of 32.5% by weight. If, on the contrary, this curve does not display a plateau at -11°C and/or if it displays a linearity defect above this temperature, it is not a eutectic urea solution. Since by aging, the aqueous urea solutions tend to be depleted of urea, a measurement of the temperature at which the linearity defect occurs serves to calculate the exact concentration of urea in the solution.

It should be noted that standard DIN 70070:2005-08 permits a slight variation in the urea concentration. In fact, the tolerance range extends from 31.8 to 33.2% by weight. With a concentration at 31.8%, for example, there is in fact a linearity defect in the temperature change curve at a temperature Tⁱⁱ which is very slightly above the temperature T_{E}. However, such a linearity defect is difficult to discern and can be ignored.

The above description relates to a binary urea-water solution. However, it should be observed that the same method can be used to control a ternary solution, such as a urea-water-ammonium formiate solution for example, sold under the trade name DENOXIUM™ by KEMIRA. The use of the method with other solutions, particularly ammonium precursors, is not ruled out. It is clear that the characteristic temperature depends on the solution selected and that the temperature setpoint must be selected in agreement with the desired concentration.

It should also be observed that the above description concerns a method in which a sample of a solution is cooled. By analogy, the method is also valid when the sample is heated.

## Claims

1. Method for checking the composition of an ammonia precursor solution, which is an aqueous urea solution, **characterized in that**:
- a reference curve is determined and used plotting a change in temperature of the solution as a function of time on a sample having the eutectic concentration under given conditions and over a temperature range comprising a change of state of the solution to which a characteristic temperature corresponds, which is the melting/crystallization point of the eutectic and where a constant temperature plateau is observed, said curve comprising two substantially linear portions separated by said plateau;
- a sample of solution whereof the concentration is to be checked is subjected to a change in temperature over the same temperature range and under the same conditions as those used to plot the reference curve; and
- the two curves are compared and the length of the plateau and the linearity of the temperature change curves above the characteristic temperature are analyzed in order to conclude if the composition of the solution is the same as or different from that of the eutectic.

2. Method according to the preceding claim, in which the solution is stored in a tank and its concentration is checked during the filling of the tank, the said tank being mounted on a vehicle and delivering the ammonia precursor solution to the vehicle exhaust line.

3. Method according to the preceding claim, in which the quantity of ammonia precursor solution delivered to the vehicle exhaust line is checked by a control device.

4. Method according to the preceding claim, in which the composition of the ammonia precursor solution is taken into account by the control device to determine the quantity of ammonia precursor solution to be delivered to the exhaust line.

5. Use of the method according to any one of the preceding claims in an exhaust gas pollution control device comprising a tank for storing the ammonia precursor solution, a separate chamber of the tank comprising a wall whereof the temperature is controlled and a device for measuring the temperature of a sample of solution inside the chamber or the variation in heat flux emitted or received by the said sample.

6. Use according to the preceding claim, in which the device for controlling the chamber wall temperature is a Peltier cooler.

7. Use according to either of Claims 5 and 6, in which the chamber is integrated with an "immersed" base placed across an opening made in the bottom wall of the tank, the said base comprising at least one orifice through which a system can be fed for injecting the precursor solution into the exhaust gases, and further integrating at least one other active component of the storage system and/or of the injection system.

## Patentansprüche

1. Verfahren zur Prüfung der Zusammensetzung einer Ammoniak- Präkursorlösung, bei der es sich um eine wässrige Harnstofflösung handelt, **dadurch gekennzeichnet, dass**:
- eine Bezugskurve bestimmt und eingesetzt wird, die eine Temperaturänderung der Lösung als eine Funktion der Zeit in einer Probe mit eutektischer Konzentration unter gegebenen Bedingungen und über einen Temperaturbereich hinweg aufzeichnet, der eine Zustandsänderung der Lösung umfasst, der eine charakteristische Temperatur entspricht, bei der es sich um den Schmelzpunkt / Kristallisationspunkt des Eutektikums handelt und bei dem ein konstantes Temperaturplateau beobachtet wird, wobei die Kurve zwei im Wesentlichen lineare Abschnitte umfasst, die durch das Plateau voneinander getrennt sind;
- eine Probe der Lösung, deren Konzentration zu prüfen ist, einer Temperaturänderung über denselben Temperaturbereich und unter denselben Bedingungen ausgesetzt wird wie beim Aufzeichnen der Bezugskurve; und
- die beiden Kurven verglichen werden und die Länge des Plateaus und die Linearität der Temperaturänderungskurven oberhalb der charakteristischen Temperatur analysiert werden, um festzustellen, ob die Zusammensetzung der Lösung mit der des Eutektikums identisch oder davon verschieden ist.

2. Verfahren nach dem vorangehenden Anspruch, wobei die Lösung in einem Tank gelagert wird und ihre Konzentration während des Befüllens des Tanks geprüft wird, wobei der Tank auf einem Fahrzeug angebracht ist und die Ammoniak-Präkursorlösung in die Fahrzeug-Abgasleitung einleitet.

3. Verfahren nach dem vorangehenden Anspruch, wobei die Menge der in die Fahrzeug-Abgasleitung eingeleiteten Ammoniak-Präkursorlösung von einer Regelvorrichtung geprüft wird.

4. Verfahren nach dem vorangehenden Anspruch, wobei die Zusammensetzung der Ammoniak-Präkursorlösung von der Regelvorrichtung berücksichtigt wird, um die Menge der Ammoniak-Präkursorlösung zu bestimmen, die in die Abgasleitung eingeleitet wird.

5. Verwendung des Verfahrens nach einem der vorangehenden Ansprüche in einer Abgasemissions-Regelvorrichtung, umfassend einen Tank zum Lagern der Ammoniak-Präkursorlösung, wobei eine separate Kammer des Tanks eine Wand aufweist, deren Temperatur geregelt wird, und eine Vorrichtung zum Messen der Temperatur einer Probe der Lösung in der Kammer oder der Veränderung im Wärmefluss, der von der Probe abgegeben oder aufgenommen wird.

6. Verwendung nach dem vorangehenden Anspruch, wobei die Vorrichtung zum Regeln der Kammer ein Peltier-Kühler ist.

7. Verwendung nach einem der Ansprüche 5 und 6, wobei die Kammer mit einer "eingetauchten" Grundplatte entlang einer Öffnung in der Bodenwand des Tanks integriert ist, wobei die Grundplatte wenigstens eine Öffnung aufweist, durch die ein System eingeführt werden kann, um die Präkursorlösung in die Abgase einzuspritzen, und ferner wenigstens eine weitere aktive Komponente des Lagersystems und/oder des Einspritzsystems integriert ist.

## Revendications

1. Procédé pour vérifier la composition d'une solution d'un précurseur d'ammoniac, qui est une solution aqueuse d'urée, **caractérisé en ce que** :
- on détermine et on utilise une courbe de référence établissant un changement de température de la solution en fonction du temps sur un échantillon de concentration eutectique dans des conditions données et sur une plage de température comprenant un changement d'état de la solution auquel correspond une température caractéristique, qui est le point de fusion/cristallisation de l'eutectique et où on observe un palier de température constante, ladite courbe comprenant deux portions substantiellement linéaires séparées par ledit palier ;
- on soumet un échantillon de solution dont on désire vérifier la concentration à un changement de température sur la même plage de température et dans les mêmes conditions que celles utilisées pour établir la courbe de référence ; et
- on compare les deux courbes, et on analyse la longueur du palier et la linéarité des courbes de changement de température au-dessus de la température caractéristique afin de décider si la composition de la solution est identique ou différente de celle de l'eutectique.

2. Procédé selon la revendication précédente, dans lequel la solution est stockée dans un réservoir et sa concentration est contrôlée lors du remplissage du réservoir, ce réservoir étant à bord d'un véhicule et délivrant la solution de précurseur d'ammoniac à la ligne d'échappement du véhicule.

3. Procédé selon la revendication précédente, dans lequel la quantité de solution de précurseur d'ammoniac délivrée à la ligne d'échappement du véhicule est contrôlée par un dispositif de régulation.

4. Procédé selon la revendication précédente, dans lequel la composition de la solution de précurseur d'ammoniac est prise en compte par le dispositif de régulation pour déterminer la quantité de solution de précurseur d'ammoniac à délivrer à la ligne d'échappement.

5. Utilisation du procédé selon l'une quelconque des revendications précédentes dans un dispositif de dépollution de gaz d'échappement comprenant un réservoir pour le stockage de la solution de précurseur d'ammoniac, une enceinte séparée du réservoir comprenant une paroi dont la température est régulée et un dispositif permettant de mesurer la température d'un échantillon de solution à l'intérieur de l'enceinte ou la variation de flux thermique émis ou reçu par ledit échantillon.

6. Utilisation selon la revendication précédente, dans laquelle le dispositif de régulation de la température de la paroi de l'enceinte est un refroidisseur à effet Peltier.

7. Utilisation selon la revendication 5 ou 6, dans laquelle l'enceinte est intégrée à une embase « immergée », disposée à travers une ouverture pratiquée dans la paroi inférieure du réservoir, ladite embase comprenant au moins un orifice à travers lequel on peut alimenter un système d'injection de la solution de précurseur dans les gaz d'échappement, et intégrant en outre au moins un autre composant actif du système de stockage et/ou du système d'injection.
